# FASCICULE DE BREVET EUROPEEN

(11) **EP 0 437 600 B1**
(45) Date de publication et mention de la délivrance du brevet: **19.04.1995**
(21) Numéro de dépôt: 90913484.3
(22) Date de dépôt: 08.08.1990
(51) Int. Cl.: F16P 1/02, E04B 2/78

(54) **PROFILE POUR LA REALISATION DE STRUCTURES PORTEUSES**
PROFIL ZUR ERRICHTUNG TRAGENDER AUFBAUTEN
SECTION FOR MAKING BEARING STRUCTURES

(30) Priorité: 08.08.1989 FR 8910642
(43) Date de publication de la demande: 24.07.1991
(73) Titulaire: Piget, Maurice, 27120 Pacy sur Eure (FR)
(72) Inventeur: Piget, Maurice, 27120 Pacy sur Eure (FR)
(74) Mandataire: L'Helgoualch, Jean
(86) Numéro de dépôt international: FR9000602
(87) Numéro de publication internationale: WO9102191

(56) Documents cités:
- EP-A- 0 011 554
- FR-A- 2 494 157
- US-A- 4 498 567

## Description

La présente invention concerne un nouveau profilé pour la réalisation de structures porteuses d'encadrement, notamment pour la protection de machines industrielles, ainsi que les structures porteuses obtenues par assemblages desdits profilés.

Dans le domaine de la protection et de l'insonorisation des machines industrielles, il est généralement nécessaire de réaliser des structures fermées enveloppant les machines et les isolant de l'extérieur au moyen d'une armature portant des panneaux fixes ou amovibles.

La nécessité de pouvoir accéder aux machines à l'intérieur de la structure, pour effectuer par exemple des réglages ou des réparations, impose que certains panneaux ou éléments d'armature soient amovibles ou mobiles, et par exemple on peut prévoir de réaliser certains panneaux sous forme de portes pivotantes, basculantes ou coulissantes. La suspension et la manoeuvre de ces panneaux coulissants sont assurées par galets, patins ou roulettes susceptibles de se déplacer dans un profilé de forme appropriée, présentant par exemple un chemin de roulement recevant un ou plusieurs galets solidaires du panneau coulissant.

La plupart de ces profilés ne comportent cependant que deux chemins de roulement parallèles, et leur hauteur est limitée à une valeur légèrement supérieure au diamètre du galet. De plus, ces profilés sont généralement à section fermée, pour des raisons de résistance mécanique. Cette limitation conditionne l'importance de la charge susceptible d'être déplacée, et il est nécessaire, dans le cas de structures de protection de machines, de combiner ces profilés à une armature porteuse par de nombreux points de fixation. Par exemple, dans le cas de panneaux devant coulisser sur une longueur importante, il est nécessaire de joindre bout à bout deux ou plusieurs profilés, ce qui implique des opérations précises et coûteuses d'ajustage par soudure ou boulonnage.

En matière d'insonorisation, les éléments porteurs des matériaux insonorisants, et les éléments qui leur sont associés, sont de nature différente de celle des éléments porteurs de galets de roulement, de telle sorte que dans un seul ensemble destiné à l'insonorisation et l'isolement par sécurité d'une machine industrielle, il est nécessaire de recourir à des matériaux très différents les uns des autres, dont l'assemblage doit se faire par plusieurs techniques.

Dans ces conditions, toutes les opérations de mise en oeuvre de telles structures de protection de machines industrielles sont complexes et coûteuses, et on a donc cherché à mettre au point un matériel spécifique adapté aux besoins d'une industrie en développement.

Des armatures de sécurité à écrans mobiles pour machine-outils sont décrites dans les brevets FR-2.494.157 et EP-011.154. D'autre part, le brevet US-4.498.567 décrit une armature dont les montants sont constitués par un profilé en H présentant sur ses faces extérieures, des alvéoles ouverts dans lesquels peuvent coulisser verticalement des panneaux mobiles. Ces dispositifs ne répondent cependant pas aux objectifs visés par la présente invention.

La présente invention a précisément pour objet un nouveau profilé permettant la réalisation de structures porteuses de panneaux coulissants, notamment pour la protection de machines industrielles, par un assemblage simple et peu onéreux.

L'invention a également pour objet les nouvelles structures porteuses pour panneaux coulissants, obtenues par assemblage de tels profilés.

Le profilé conforme à la présente invention possède une structure comportant au moins deux nervures parallèles superposées constituant des chemins de roulement pour galets, ou moyens équivalents, et permettant l'assemblage de deux profilés dans deux directions, au moyen d'un simple accessoire, sans perçage, boulonnage, vissage ou rivetage.

Le profilé de l'invention est constitué d'un voile central présentant sur chacune de ses faces, symétriquement par rapport au plan du voile, au moins deux nervures dédoublées à section en forme de "U".

Plus particulièrement, la section de chaque nervure comporte deux branches parallèles, sensiblement perpendiculaires au plan du voile central, séparées par une feuillure d'encastrement pouvant recevoir une pièce complémentaire de forme adaptée. Suivant une caractéristique complémentaire de l'invention, les extrémités des deux branches d'au moins deux nervures consécutives sont coudées de part et d'autre de la feuillure centrale, pour former avec une nervure latérale formée sur chaque branche, au moins une feuillure d'encastrement s'ouvrant parallèlement au voile central. Suivant une forme avantageuse de réalisation de l'invention, le voile central présente sur chacune de ses faces trois nervures dédoublées équidistantes. Suivant une variante, la nervure latérale est équidistante de l'extrémité coudée de la branche et du voile central, formant ainsi avec eux deux feuillures de même dimension parallèles entre elles, s'ouvrant parallèlement au voile central. Ces feuillures latérales de deux nervures consécutives sont ainsi opposées et se font face, deux à deux.

Suivant une caractéristique complémentaire, le voile central se prolonge au-delà de l'une au moins des nervures extrêmes, et la distance entre la nervure extrême et le bord du voile est de préférence égale à la moitié de l'intervalle séparant deux nervures consécutives.

Il peut être avantageux de donner à l'un au moins des bords du voile central une forme adaptée à une utilisation ou un assemblage particulier.

Le profilé est réalisé en un matériau approprié procurant la résistance mécanique voulue, et susceptible d'être mis en forme par les techniques usuelles, par exemple par moulage ou par extrusion. On peut notamment utiliser de l'amuminium, un alliage à base d'aluminium, ou une matière plastique extrudable. Par exemple, un profilé conforme à l'invention peut être fabriqué en alliage léger à base d'aluminium par extrusion sous pression élevée à travers une filière, en utilisant les dispositifs techniques usuels.

La structure porteuse pour panneaux coulissants suivant la présente invention est réalisée par assemblage des profilés au moyen d'un profilé complémentaire plat ou en "U" coopérant avec au moins deux nervures consécutives. Plus particulièrement, la structure porteuse pour panneaux coulissants suivant l'invention est constituée par la combinaison d'au moins deux profilés décrits ci-dessus, assemblés deux à deux par au moins un profilé complémentaire plat ou en "U" dont chaque branche ou chacun des deux bords opposés est encastré dans une nervure de chacun des deux profilés.

Par exemple, l'assemblage de deux profilés nervurés joints bout à bout, les nervures étant dans le prolongement l'une de l'autre, peut être réalisé par un profilé en "U" dont les branches sont encastrées dans la feuillure centrale de deux nervures ou par un profilé plat encastré entre les feuillures latérales opposées de deux nervures consécutives.

Il est également possible d'assembler deux profilés l'un au-dessus de l'autre, dans un même plan, au moyen d'un simple profilé en "U" dont une branche est encastrée dans la feuillure centrale de la nervure extrême inférieure du profilé supérieur, et l'autre branche dans la feuillure centrale de la nervure extrême supérieure du profilé inférieur. Il est bien entendu aussi possible d'assembler deux profilés parallèlement en encastrant un bord d'un profilé plat dans la feuillure centrale d'une nervure du premier profilé et le bord opposé du profilé plat dans la feuillure centrale d'une nervure en correspondance du deuxième profilé.

Suivant une variante, l'assemblage orthogonal de profilé pour réaliser des structures porteuses est obtenu par un profilé en double "U", de telle sorte que la structure comporte au moins deux profilés nervurés joints orthogonalement, assemblés par le profilé en double "U" dont les branches de chaque "U" forment des plans orthogonaux entre eux.

Diverses autres structures peuvent être envisagées en combinant les profilés de l'invention avec de simples profilés d'assemblage plats ou en "U", comme indiqués dans les exemples de réalisation non limitatifs décrits ci-après, en référence aux dessins annexés, qui représentent :

Figure 1 : une vue en coupe montrant la section d'un profilé de l'invention.

Figure 2 : une coupe schématique de l'assemblage de deux profilés l'un au-dessus de l'autre.

Figure 3 : une vue en perspective de l'assemblage bout à bout de deux profilés au moyen de profilés plats.

Figure 4 : une coupe schématique de l'assemblage en parallèle de deux profilés au moyen de profilés en "U".

Figure 5 : une vue en perspective de l'assemblage orthogonal de plusieurs profilés.

Figures 6 et 7 : une vue en perspective d'un élément d'assemblage du type utilisé sur la figure 5.

Figure 8 : une vue en perspective de l'application du profilé de l'invention au guidage de galets de roulement.

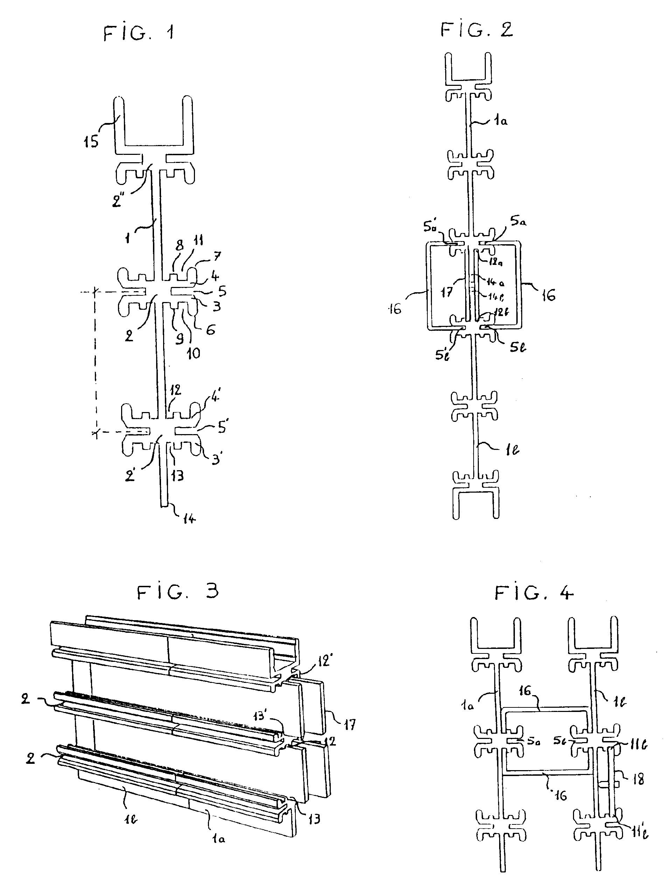

Le profilé représenté sur la figure 1, réalisé en alliage léger d'aluminium, est constitué par un voile central (1) comportant deux nervures (2) et (2') de raidissement sur chacune de ses faces, disposées parallèlement, à une distance prédéterminée l'une de l'autre. Chaque nervure comporte deux branches parallèles (3) et (4) sensiblement perpendiculaires au plan du voile central (1) et délimitant une feuillure (5) pour l'encastrement d'un profilé d'assemblage, le cas échéant.

Chaque branche de nervure présente un bord coudé (6) et (7) orienté vers l'extérieur de la feuillure (5). En outre, la face extérieure de chaque branche (3) et (4) comporte une nervure latérale (8) et (9) formant avec les bords (6) et (7) respectivement, une feuillure latérale (10) et (11) à ouverture parallèle au plan du voile central (1). En outre, une feuillure latérale supplémentaire (12) et (13) est formée entre la nervure latérale (8) et (9) respectivement, et le voile central (1). Ces nervures latérales renforcent la rigidité du profilé et permettent, par exemple, l'encastrement d'un profilé plat d'assemblage, ou d'une pièce de fixation d'accessoire, entre les feuillures correspondantes opposées de deux nervures (2) et (2′) consécutives, comme indiqué ci-après.

Le bord extrême inférieur (14) du voile central (1) s'étend au-delà de la nervure inférieure (2) sur une largeur égale à la moitié de l'intervalle séparant les deux nervures (2) et (2′). Dans l'exemple représenté sur la figure 1, l'autre bord comporte une nervure (2˝) dont les branches supérieures (15) forment entre elles un "U" destiné par exemple à l'encastrement d'un cablage électrique reliant des détecteurs placés sur la structure de protection de machine réalisée par l'assemblage des profilés.

Les bords des extrémités des branches (6), (7) et (14) peuvent être formés en chemin de roulement pour galet comme indiqué ci-après.

La figure 2 montre l'assemblage de deux profilés, bord contre bord, l'un au-dessus de l'autre, au moyen de profilés d'assemblage. Les deux voiles centraux (1a) et (1b) sont placés symétriquement dans un même plan, les bords (14a) et (14b) étant juxtaposés. L'assemblage est réalisé au moyen de deux profilés en "U" (16) identiques dont les branches s'emboîtent dans les feuillures centrales (5a) et (5b). Le montage est complété par les deux profilés plats identiques (17) qui sont encastrés dans les feuillures latérales opposées (12a) et (12b) et assurent la rigidité de l'ensemble.

Un exemple d'assemblage bout à bout de deux profilés suivant l'invention est représenté sur la figure 3.

Sur cette figure, les deux profilés (1a) et (1b) sont réunis par l'intermédiaire des quatre profilés plats d'assemblage (17) dont les bords opposés sont encastrés dans les deux feuillures se faisant face (12) et (13), (12′) et (13′), respectivement, de deux nervures (2) et (2′) consécutives sur chacune des faces de chaque profilé (1a) et (1b). Ce mode d'assemblage procure une excellente précision sans qu'il soit nécessaire de procéder à des ajustages, car les bords des nervures correspondantes des deux profilés sont parfaitement alignés. En outre, en raison de l'encastrement des profilés plats dans les feuillures en prolongement les unes des autres de chaque côté du voile central des deux profilés (1a) et (1b), aucun dispositif complémentaire de fixation par boulonnage ou rivetage n'est nécessaire, et les bords (6) et (7) de chaque profilé constituent alors un chemin de roulement continu, ne présentant aucun obstacle au passage des galets de roulement.

Un même assemblage bout à bout de profilés peut être obenu au moyen des profilés d'assemblage en "U" (16) dont les branches s'engagent dans deux feuillures centrales consécutives (5a, 5′a) et (5b, 5′b) respectivement, de chaque profilé (1a) et (1b).

Un exemple d'assemblage en parallèle de deux profilés suivant l'invention est représenté sur la figure 4.

Sur ce montage, les deux profilés en "U" identiques (16) sont encastrés par leurs branches dans les feuillures latérales (12a, 13a) et (12b, 13b) respectivement. La juxtaposition des branches des profilés en "U" (16) contre le voile central (1a) et (1b) de chaque profilé permet de renforcer la rigidité de l'ensemble. Une plaque (18) est insérée entre les feuillures latérales (11b) et (11′b). Cette plaque peut servir de support pour tout organe de fonctionnement tel que butée de porte coulissante, contacteur de sécurité, plaque d'obturation ou d'étanchéité. Elle peut être fixée librement et simplement en toute position du profilé, et bloquée par exemple au moyen d'une simple vis prenant appui contre le voile central (1).

Suivant une variante conforme à la présente invention, l'assemblage en parallèle de plusieurs profilés peut aussi être réalisé au moyen de profilés plats (17) encastrés dans les feuillures (5a) et (5b), disposées face à face, d'au moins deux nervures des profilés (1a) et (1b).

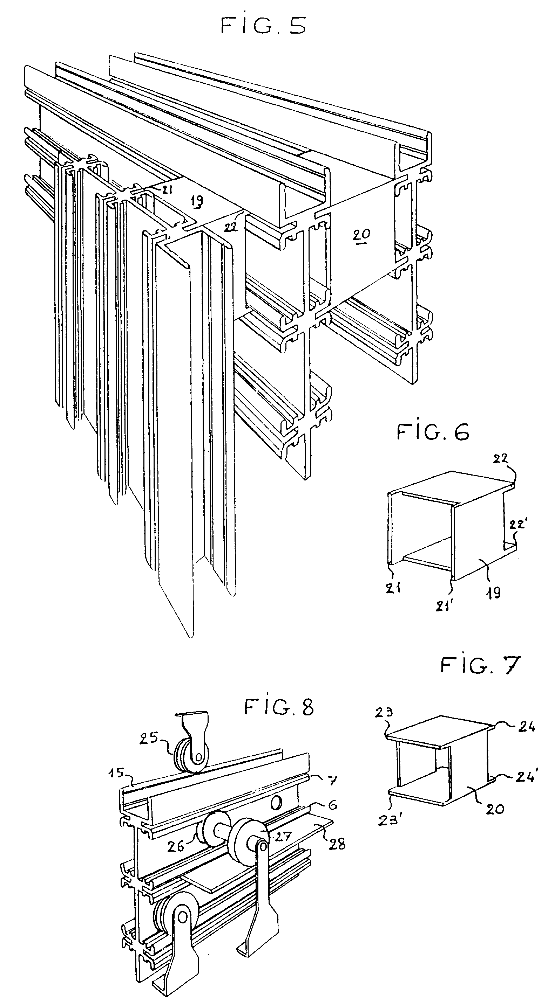

Les profilés suivant la présente invention peuvent être assemblés orthogonalement comme le montre la figure 5.

Sur cette figure, l'assemblage des profilés est réalisé au moyen de profilés en double "U", à section fermée, (19) et (20) représentés isolément sur les figure 6 et 7 respectivement. Le profilé (19) présente deux "U" orthogonaux dont les branches (21, 21′) et (22, 22′) sont deux à deux perpendiculaires. Ces branches sont encastrées dans les feuillures centrales (5) et (5′) de chaque profilé.

Le profilé d'assemblage (20) comporte des branches de "U" (23, 23′) et (24, 24′) parallèles s'engageant dans les feuillures centrales (5) et (5′) des profilés, et les maintenant donc en position parallèle, comme le montre la figure 5. Ce profilé peut le cas échéant être remplacé par deux profilés plats d'assemblage, disposés parallèlement.

Dans cette forme de réalisation de l'invention, l'écartement entre les branches de chaque "U" est égal à l'intervalle entre deux rainures consécutives d'un profilé nervuré selon la présente invention.

La figure 8 montre que la forme du profilé suivant l'invention est adaptée pour que les rebords des branches des nervures servent de chemin de roulement, guidant des galets solidaires de panneaux mobiles (non représentés).

Ainsi par exemple, un galet (25) est guidé par le bord de la branche (15) tandis qu'un deuxième galet (26) peut rouler sur le bord (6) d'une nervure et être guidé par le bord (7) de la nervure voisine, ce qui permet de fixer un troisième galet (27) décalé en bout d'axe, le bras de levier ainsi créé étant compensé par l'appui du galet (26) contre la branche (7). En outre, une plaque (28) peut être encastrée dans la feuillure centrale (5) pour supporter le troisième galet (27).

Le profilé nervuré conforme à la présente invention permet aussi de fixer aisément divers accessoires, tels que des contacts de porte, ou des détecteurs, qui peuvent être encastrés dans les feuillures, et, si nécessaire, bloqués en position par de simples agrafes métalliques faisant ressort contre les parois de la feuillure. Il peut également être avantageux d'utiliser les feuillures latérales pour masquer des passages de câbles ou fils électriques de contrôle des divers accessoires.

## Revendications

1. Profilé pour la réalisation de structures porteuses pour panneaux coulissants, caractérisé en ce qu'il est constitué d'un voile central (1) présentant sur chacune de ses faces, symétriquement par rapport au plan du voile, au moins deux nervures (2) et (2′) dédoublées à section en forme de "U" comportant deux branches parallèles (3) et (4), sensiblement perpendiculaires au plan du voile central (1), séparées par une feuillure d'encastrement (5), et en ce que les extrémités (6) et (7) des deux branches d'au moins deux nervures consécutives sont coudées de part et d'autre de la feuillure centrale (5), pour former avec une nervure latérale (8, 9) formée sur chaque branche, au moins une feuillure d'encastrement (10, 11) s'ouvrant parallèlement au voile central.

2. Profilé selon la revendication 1, caractérisé en ce que le voile central présente sur chacune de ses faces trois nervures dédoublées équidistantes.

3. Profilé selon la revendication 1, caractérisé en ce que la nervure latérale (8, 9) est équidistante de l'extrémité coudée (6, 7) de la branche et du voile central (1), formant ainsi avec eux deux feuillures parallèles entre elles, s'ouvrant parallèlement au voile central.

4. Profilé selon l'une quelconque des revendications précédentes, caractérisé en ce que le voile central se prolonge au-delà de l'une au moins des nervures extrêmes.

5. Profilé selon la revendication 4, caractérisé en ce que la distance entre la nervure extrême et le bord du voile est égale à environ la moitié de l'intervalle séparant deux nervures consécutives.

6. Profilé selon l'une quelconque des revendications précédentes, caractérisé en ce que la nervure est formée de manière à constituer un chemin de guidage d'un galet ou patin solidaire d'un panneau coulissant.

7. Structure porteuse pour panneaux coulissants, caractérisée en ce qu'elle est constituée par la combinaison d'au moins deux profilés nervurés suivant l'une quelconque des revendications précédentes assemblés deux à deux par au moins un profilé en "U" (16) ou un profilé plat (17) dont chaque branche ou chacun des deux bords opposés, est encastré dans une nervure de chacun des deux profilés.

8. Structure porteuse selon la revendication 7, caractérisée en ce qu'elle comporte au moins deux profilés nervurés joints bout à bout, les nervures étant dans le prolongement l'une de l'autre, assemblés par un profilé en "U" (17) dont les branches sont encastrées dans la feuillure centrale (5) de deux nervures.

9. Structure porteuse selon la revendication 7, caractérisée en ce qu'elle comporte au moins deux profilés nervurés (1a, 1b) joints bout à bout, les nervures étant dans le prolongement l'une de l'autre, assemblés par un profilé plat (17) encastré entre les feuillures latérales opposées (12, 13) de deux nervures consécutives.

10. Structure porteuse selon la revendication 7, caractérisée en ce qu'elle comporte au moins deux profilés nervurés joints orthogonalement, assemblés par un profilé en double "U" (19), dont les branches (21, 21′) et (22, 22′) de chaque "U" forment des plans orthogonaux entre eux.

11. Structure porteuse selon la revendication 10, caractérisée en ce que l'écartement entre les branches de chaque "U" est égal à l'intervalle entre deux rainures consécutives d'un profilé.

## Patentansprüche

1. Profil zur Errichtung tragender Aufbauten für ineinander verschiebbare Platten, dadurch gekennzeichnet, daß es aus einem Mittelsteg bzw. -segel (1) besteht, der auf jeder seiner Seiten und symmetrisch im Verhältnis zur Stegebene zumindest zwei Rippen (2) und (2′) aufweist, die im Querschnitt in eine "U"-Form mit zwei parallelen Ästen (3) und (4) zweigeteilt sind, die zur Ebene des Mittelstegs (1) deutlich bzw. im wesentlichen senkrecht stehen und durch einen Einfügungsfalz (5) voneinander getrennt sind, und daß die Enden (6) und (7) der zwei Äste von zumindest zwei hintereinander angeordneten Rippen auf beiden Seiten des Mittelfalzes (5) gekrümmt sind, um mit einer auf jedem Ast ausgebildeten Seitenrippe (8, 9) zumindest einen Einfügungsfalz (10, 11) zu bilden, der sich parallel zum Mittelsteg öffnet.

2. Profil nach Anspruch 1, worin der Mittelsteg auf jeder seiner Seiten drei geteilte Rippen im gleichen Abstand zueinander aufweist.

3. Profil nach Anspruch 1, worin die Seitenrippe (8, 9) vom gekrümmten Ende (6, 7) des Astes und des Mittelsteges (1) abstandsgleich ist, wodurch er mit ihnen zwei parallele Falze dazwischen bildet, die sich parallel zum Mittelsteg öffnen.

4. Profil nach einem der vorhergehenden Ansprüche, worin sich der Mittelsteg über zumindest eine der äußersten Rippen hinweg erstreckt.

5. Profil nach Anspruch 4, worin der Abstand zwischen der äußersten Rippe und dem Rand des Stegs etwa der Hälfte des Abstands zwischen zwei hintereinander angeordneten Rippen entspricht.

6. Profil nach einem der vorhergehenden Ansprüche, worin die Rippe so ausgebildet ist, daß sie einen Führungsweg einer einzelnen Rolle oder Kufe einer verschiebbaren Platte darstellt.

7. Tragender Aufbau für ineinander verschiebbare Platten, worin dieser aus der Kombination von zumindest zwei gerippten Profilen nach einem der vorhergehenden Ansprüche besteht, die paarweise an zumindest einem "U"-Profil (16) oder einem flachen Profil (17) angeordnet sind, bei dem jeder Ast oder jeder der beiden gegenüberliegenden Ränder in eine Rippe jedes der beiden Profile eingefügt ist.

8. Tragender Aufbau nach Anspruch 7 mit zumindest zwei aneinander angefügten gerippten Profilen, wobei die Rippen in der Verlängerung die jeweils andere bilden, die an einem "U"-Profil (16) angeordnet sind, dessen Äste in den Mittelfalz (5) der zwei Rippen eingefügt sind.

9. Tragender Aufbau nach Anspruch 7 mit zumindest zwei aneinander angefügten gerippten Profilen (1a, 1b), wobei die Rippen in ihrer Verlängerung die jeweils andere bilden, die an einem flachen (17) Profil angeordnet sind, das zwischen gegenüberliegenden Seitenfalzen (12, 13) von zwei hintereinander angeordneten Rippen eingefügt ist.

10. Tragender Aufbau nach Anspruch 7 mit zumindest zwei rechtwinkelig miteinander verbundenen gerippten Profilen, die an einem doppelten "U"-Profil (19) angeordnet sind, dessen Äste (21, 21′) und (22, 22′) von jedem "U" dazwischen rechtwinkelige Ebenen bilden.

11. Tragender Aufbau nach Anspruch 10, worin der Abstand zwischen den Ästen jedes "U" dem Abstand zwischen zwei hintereinander ausgebildeten Rillen eines Profils entspricht.

## Claims

1. A profile for making bearer structures for sliding panels, characterised in that it comprises a central web (1), each of the surfaces of which has, symmetrically with respect to the web plane, at least two ribs (2 and 2′) divided into two and of U section comprising two parallel arms (3 and 4), said ribs being substantially perpendicular to the plane of the central web (1), and being separated by a fixing groove (5), and in that the ends (6 and 7) of the two arms of at least two consecutive ribs are bent on either side of the central groove (5) to form, with a side rib (8, 9) formed on each arm, at least one fixing groove (10, 11) opening parallel to the central web.

2. A profile according to claim 1, characterised in that the central web has on each of its surfaces three equidistant ribs divided into two.

3. A profile according to claim 1, characterised in that the side rib (8, 9) is equidistant from the bent end (6, 7) of the arm and from the central web (1), thus forming therewith two parallel grooves which open parallel to the central web.

4. A profile according to any one of the preceding claims, characterised in that the central web extends beyond at least one of the end ribs.

5. A profile according to claim 4, characterised in that the distance between the end rib and the edge of the web is equal to approximately half the gap between two consecutive ribs.

6. A profile according to any one of the preceding claims, characterised in that the rib is so formed as to form a guideway for a roller or shoe connected to a sliding panel.

7. A bearer structure for sliding panels, characterised in that it is formed by the combination of at least two ribbed profiles according to any one of the preceding claims connected in pairs by at least one "U" profile (16) or a flat profile (17), of which each arm or each of the two opposite edges is fixed in a rib of each of the two profiles.

8. A bearer structure according to claim 7, characterised in that it comprises at least two ribbed profiles joined end to end, the ribs being connected, in extension of one another, by a "U" profile (17), the arms of which are fixed in the central groove (5) of two ribs.

9. A bearer structure according to claim 7, characterised in that it comprises at least two ribbed profiles (1a, 1b) joined end to end, the ribs being connected, in extension of one another, by a flat profile (17) fixed between the opposite side grooves (12, 13) of two consecutive ribs.

10. A bearer structure according to claim 7, characterised in that it comprises at least two ribbed profiles joined at right angles, connected by a double "U" profile (19), the arms (21, 21′ and 22, 22′) of each "U" of which form planes at right angles to one another.

11. A bearer structure according to claim 10, characterised in that the spacing between the arms of each "U" is equal to the gap between two consecutive grooves of a profile.
